# EUROPÄISCHE PATENTSCHRIFT

(11) **EP 0 401 479 B1**
(45) Veröffentlichungstag und Bekanntmachung des Hinweises auf die Patenterteilung: **28.07.1993**
(21) Anmeldenummer: 90104901.5
(22) Anmeldetag: 15.03.1990
(51) Int. Cl.: F16M 11/04, H04M 1/12

(54) **Halterung für Telefonapparate oder dergleichen**
Support for telephone or similar apparatus
Support d'appareils téléphoniques ou analogues

(30) Priorität: 03.06.1989 DE 3918179
(43) Veröffentlichungstag der Anmeldung: 12.12.1990
(73) Patentinhaber: Sträter, Fritz, D-58540 Meinerzhagen (DE); Sträter, Uwe, D-58540 Meinerzhagen (DE)
(72) Erfinder: Sträter, Fritz, D-58540 Meinerzhagen (DE); Sträter, Uwe, D-58540 Meinerzhagen (DE)
(74) Vertreter: Patentanwälte Dipl.-Ing. Conrad Köchling Dipl.-Ing. Conrad-Joachim Köchling

(56) Entgegenhaltungen:
- CH-A- 663 881
- DE-A- 2 819 976
- DE-C- 218 498
- DE-U- 8 906 834
- FR-A- 2 154 041

## Beschreibung

Die Erfindung betrifft eine Halterung für einen Telefonapparat, eine Schreibvorlage, ein tastenbetätigtes Bürogerät oder dergleichen, bestehend aus einer an einer Tischplatte oder dergleichen Auflager befestigbaren Säule mit selbsthaltendem Gelenkarm, wobei der Gelenkarm mit dem einen Endteil an der Säule und mit den anderen Endteil am einen Ende eines weiteren Tragarmes angelenkt ist, an dessen freiem Enden eine Tragplatte oder dergleichen angeordnet ist, und wobei der Gelenkarm zwei in ihrer Längserstreckung geteilte Gehäusehalbschalen oder eine Schiene umfaßt, die um an der Säule bzw. dem Tragarm gehalterte Achsen drehbar gelagert sind. bzw. ist, wobei zusätzlich mindestens eine Schiene oder ein Schienenpaar vorgesehen ist, deren Enden exzentrisch an auf den Gelenkachsen angeordneten Gelenkscheiben angelenkt sind, welche Gelenkscheiben unverdrehbare Bestandteile der Säule bzw. des Tragarmes sind.

Eine derartige Halterung ist beispielsweise aus der DE-C 28 19 976 bekannt.

Diese an sich durchaus funktionstüchtige und vorteilhafte Halterung ist insofern nachteilig, als ein auf dem Tragarm gehalterter Telefonapparat oder dergleichen beim Absenken des Tragarmes aus der extremen Hochlage in die extreme Tieflage, die Tragplatte aufgrund der Parallelogrammfunktion des Schwenkarmes ständig in der gleichen Stellung bleibt, also üblicherweise waagerecht ausgerichtet ist. Diese Stellung ist zwar dann gut brauchbar, wenn der Telefonapparat oder dergleichen in der extremen Tieflage angeordnet ist, da dann das Tastenfeld und auch Displayanzeigen oder dergleichen von ähnlichen Geräten und Apparaten im Blickfeld des Benutzers liegen, diese jedoch beim Anheben in die extreme Hochlage in einem optisch ungünstigen Blickwinkel liegen, so daß der Benutzer aus der sitzenden Position das Tastenfeld bzw. Display-anzeigen oder dergleichen nicht mehr oder nur schlecht erfassen kann.
Ausgehend von diesem Stand der Technik liegt der Erfindung die Aufgabe zugrunde, eine Halterung gattungsgemäßer Art zu schaffen, die bei einfachem Aufbau eine bessere Ablesbarkeit der auf dem Tragarm angeordneten Geräte oder dergleichen in jeder relativen Schwenklage ermöglicht.

Zur Lösung dieser Aufgabe wird vorgeschlagen, daß der radiale Abstand der Anlenkstellen der Schiene von den Gelenkachsen unterschiedlich ist, wobei der Abstand der Anlenkstelle an der säulenseitigen Gelenkscheibe größer ist als der Abstand der Anlenkstelle an der tragarmseitigen Gelenkscheibe.

Als selbständige Variante oder als zusätzliche Ausbildung wird vorgesehen, daß an den Gelenkscheiben zwei Schienen bzw. Schienenpaare angelenkt sind, die gleiche Wirklänge aufweisen, wobei der Abstand der Anlenkstellen der Schienen bzw. Schienenpaare voneinander an der säulenseitigen Gelenkscheibe größer als der Abstand der Anlenkstellen an der tragarmseitigen Gelenkscheibe ist.
Durch diese Anordnung wird erreicht, daß die am freien Ende des Tragarmes befindliche Tragplatte, die mit diesem starr verbunden ist, beim Absenken der Halterung aus der extremen Hochlage in die extreme Tieflage eine zur Schwenkbewegung gegenläufige Bewegung ausführt, so daß sich die relative Winkellage der Tragplatte ständig ändert.

Dabei ist vorzugsweise vorgesehen, daß die am Ende des Tragarmes angeordnete Tragplatte bei gestrecktem Gelenk des zwischen Tragarm und Gelenkarm befindlichen Gelenkes mindestens etwa parallel zur vom Fußteil der Säule aufgespannten Ebene gerichtet verläuft.

Bei dieser Anordnung ist bei vollständig abgesenktem Tragarm die Anordnung so getroffen, daß die Tragplatte praktisch horizontal gerichtet ist und das darauf befindliche Gerät oder dergleichen für den an dem entsprechenden Tisch sitzenden Benutzer gut sichtbar ist. Beim Anheben des Tragarmes von der extremen Tieflage bis in die extreme Hochlage ändert sich der Neigungswinkel der Tragplatte ständig in der Weise, daß die Tragplatte und damit das darauf befindliche Gerät oder dergleichen zum Betrachter hin in einem gegenüber der horizontalen abfallenden Winkel angestellt wird. Das Tastenfeld, Displayanzeigen oder dergleichen sind damit auch dann für den sitzenden Benutzer gut ablesbar, wenn die Halterung in der extremen Hochlagestellung sich befindet. Durch diese Ausbildung wird zusätzlich erreicht, daß bei ansonsten gleichen Abmessungen eine größere Ausladung der Tragplatte relativ zur Säule beim Absenken aus der Hochstellung in die Tiefstellung erfolgt, so daß das auf der Tragplatte abgestellte Gerät oder dergleichen näher an den Benutzer herangeführt wird. Desweiteren ist eine etwas geringere Bauhöhe des Säulenteils bei ansonsten gleichen Abmessungen möglich, da auch bei einer entsprechenden geringeren Bauhöhe der Säule die untere Extremlage der Tragplatte praktisch parallel zum Tisch bzw. auf dem Tisch aufliegend schon erreicht wird.

Insbesondere bei der Ausbildung gemäß Anspruch 1, aber gegebenenfalls auch bei der Ausbildung nach Anspruch 2, kann die Schiene bzw. das Schienenpaar von den Halbschalen des Gelenkarmes abgedeckt sein, so daß ein ausreichender Berührungsschutz gegeben ist.

In Weiterbildung wird noch in an sich bekannter Weise vorgeschlagen, daß an der Säule und dem Tragarm Vorsprünge ausgeformt sind, an die der Gelenkarm in den beiden extremen Schwenkstellungen anlegbar ist, wobei in der einen extremen Stellung der Gelenkarm mindestens etwa koaxial zur Säule und der anderen mindestens etwa rechtwinklig zur Säule gerichtet ist.

Darüber hinaus ist es möglich durch übliche Mittel eine kraftschlüssige oder durch Federn erzeugte Gleichgewichtslage zu erreichen, so daß beim Verschwenken des Armes die jeweilige Relativlage der Halterung selbständig gehalten wird.

Ein Ausführungsbeispiel der Erfindung ist in der Zeichnung dargestellt und im folgenden näher beschrieben.

Es zeigt:
- Fig. 1: eine Halterung in der oberen Extremlage in Seitenansicht, teilweise aufgebrochen;
- Fig. 2: desgleichen in der unteren Extremlage.

Die Halterung für einen Telefonapparat, eine Schreibvorlage, ein tastenbetätigtes Bürogerät (Rechenmaschinen, Kommunikationseinrichtung oder dergleichen) besteht im wesentlichen aus einer an einer Tischplatte befestigbaren Säule 2 mit selbsthaltendem Gelenkarm 3 und Tragarm 4. Der Gelenkarm 3 ist mit dem einen, in der Zeichnung linken Endteil an dem freien Ende der Säule 2 und mit dem anderen, an der Zeichnungsfigur 2 rechtsliegenden Endteil am einen Ende des Tragarmes 4 angelenkt. Am freien Ende des Tragarmes 4 ist zusätzlich eine Tragplatte 5 angeordnet. Der Gelenkarm 3 umfaßt zwei symmetrisch ausgebildete, mittig ihrer Längserstreckung geteilte Gehäusehalbschalen, von denen nur eine in der Zeichnung gezeigt ist. Die in der Zeichnung vornliegende ist der Übersichtlichkeit halber nicht gezeigt. Diese Gehäusehalbschalen des Gelenkarmes 3 sind um an der Säule 2 bzw. am Tragarm 4 gehalterte Achse drehbar gelagert. Es ist möglich, die Achsstummel als Bestandteile des Gelenkarmes 3 auszubilden, die dann in entsprechende Lageröffungen an den Enden der Säule und des Tragarmes eingesetzt sind, oder aber die Achsstummel können an den Säulen bzw. Tragarmteilen angeordnet sein und die Schalen des Gelenkarmes entsprechende Aufnahmelager besitzen.

Im Ausführungsbeispiel ist zusätzlich zu der gelenkigen Anordnung des Gelenkarmes 3 eine Schiene 6 (Stange) zwischen den Gehäuseschalen des Gelenkarmes 3 angeordnet. Die rechtwinklig abgewinkelten Enden der Schiene 6 sind exzentrisch an auf den Gelenkachsen angeordneten Gelenkscheiben 7,8 angelenkt, also in entsprechende Aufnahmelochungen eingesetzt. Dabei sind die Gelenkscheiben 7, 8 Bestandteile der Säule 2 bzw. des Tragarmes 4.

Erfindungsgemäß ist der radiale Abstand der Anlenkstellen 9, 10 an der säulenseitigen Gelenkscheibe 7 größer als der Abstand der Anlenkstelle 10 an der tragarmseitigen Gelenkscheibe 8. Die Gelenkachsenmitten sind mit dem Bezugszeichen 11 bzw. 12 versehen. Der Abstand ist mit a bzw. b angegeben. Anstelle der einen Schiene 6 können auch beidseitig der Gelenkscheiben 7, 8 Schienen angeordnet sein. Es könnnen auch zwei Schienen oder Schienenpaare vorgesehen sein, die die gleiche Wirklänge aufweisen, so daß dann eine Schiene die Schiene 6 und eine weitere Schiene den Gelenkarm 3 ersetzt.

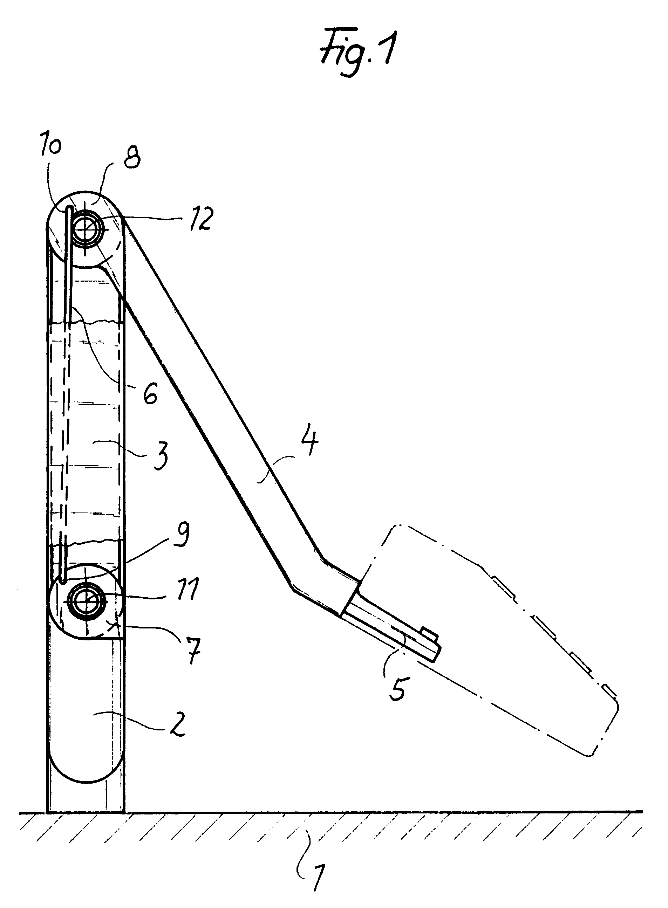

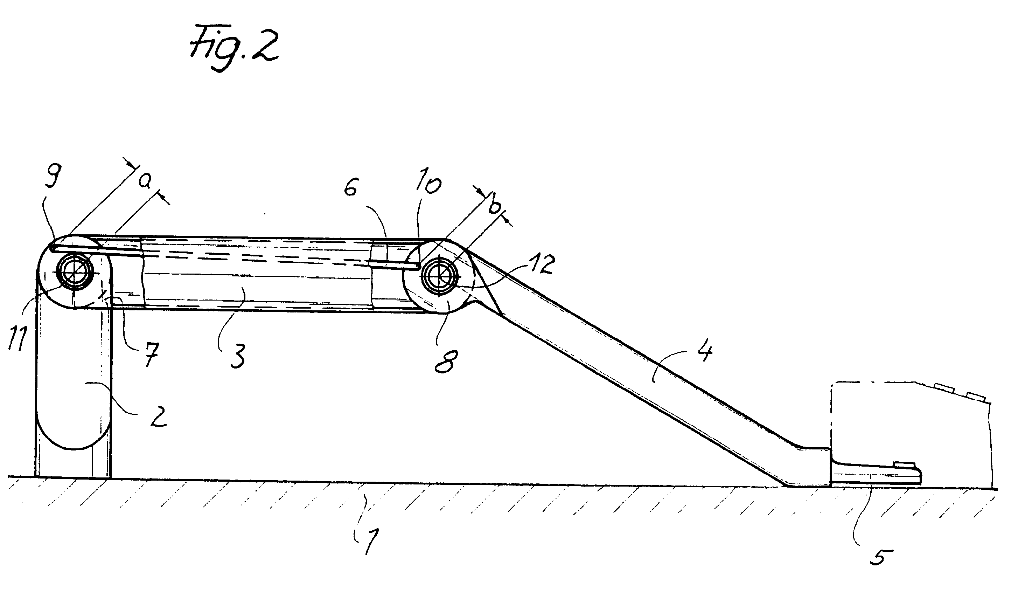

Die am Ende des Tragarmes 4 angeordnete Tragplatte 5 ist bei gestrecktem Gelenk gemäß Figur 2 parallel zum Tisch 1 gerichtet und liegt auf diesem auf. Sie fluchtet also mit der auf dem Tisch aufstehenden Fläche der Säule 2. In der extremen Hochlage, die in Figur 1 dargestellt ist, ist ersichtlich, daß die Tragplatte 5 gegenläufig zur Schwenkbewegung in der Zeichnung nach relativ unten abgewinkelt ist, so daß ein darauf befindliches Gerät oder dergleichen von der am Tisch sitzenden Person besser abzulesen und zu bedienen ist. Diese gegenläufige Bewegung der Tragplatte 5 wird durch die erfindungsgemäße Anordnung der Schiene 6 erreicht. Zusätzlich sind in bekannter Art und Weise an der Säule 2 und dem Tragarm 4 Vorsprünge ausgebildet bzw. ausgeformt, an die der Schwenkarm 3 mit seinen Gehäuseschalen in den beiden extremen Schwenkstellungen anlegbar ist, so daß Begrenzungsanschläge für die beiden Extremlagen gebildet sind. Die beiden Extremlagen sind in den Zeichnungsfiguren dargestellt.

## Patentansprüche

1. Halterung für einen Telefonapparat, eine Schreibvorlage, ein tastenbetätigtes Bürogerät oder dergleichen, bestehend aus einer an einer Tischplatte (1) oder dergleichen Auflager befestigbaren Säule (2) mit selbsthaltendem Gelenkarm (3), wobei der Gelenkarm (3) mit dem einen Endteil an der Säule (2) und mit dem anderen Endteil am einen Ende eines weiteren Tragarmes (4) angelenkt ist, an dessen freiem Ende eine Tragplatte (5) oder dergleichen angeordnet ist, und wobei der Gelenkarm (3) zwei in ihrer Längserstreckung geteilte Gehäusehalbschalen oder eine Schiene umfaßt, die um an der Säule (2) bzw. dem Tragarm (4) gehalterte Achsen drehbar gelagert sind bzw. ist, wobei zusätzlich mindestens eine Schiene (6) oder ein Schienenpaar vorgesehen ist, deren Enden exzentrisch an auf den Gelenkachsen angeordneten Gelenkscheiben (7,8) angelenkt sind, welche Gelenkscheiben (7,8) unverdrehbare Bestandteile der Säule (2) bzw. des Tragarms (4) sind, **dadurch gekennzeichnet**, daß der radiale Abstand der Anlenkstellen (9,10) der Schiene (6) von den Gelenkachsen (11,12) unterschiedlich ist, wobei der Abstand (a) der Anlenkstelle (9) an der säulenseitigen Gelenkscheibe (7) größer ist als der Abstand (b) der Anlenkstelle (10) an der tragarmseitigen Gelenkscheibe (8).

2. Halterung nach Anspruch 1, **dadurch gekennzeichnet**, daß an den Gelenkscheiben (7,8) zwei Schienen (6) bzw. Schienenpaare angelenkt sind, die gleiche Wirklänge aufweisen, wobei der Abstand der Anlenkstellen der Schienen bzw. Schienenpaare voneinander an der säulenseitigen Gelenkscheibe (7) größer als der Abstand der Anlenkstellen an der tragarmseitigen Gelenkscheibe (8) ist.

3. Halterung nach Anspruch 1 oder 2, **dadurch gekennzeichnet**, daß die am Ende des Tragarmes (4) angeordnete Tragplatte (5) bei gestrecktem Gelenk des zwischen Tragarm (4) und Gelenkarm (3) befindlichen Gelenkes mindestens etwa parallel zur vom Fußteil der Säule (2) aufgespannten Ebene gerichtet verläuft.

4. Halterung nach einem der Ansprüche 1 bis 3, **dadurch gekennzeichnet**, daß an der Säule (2) und dem Tragarm (4) Vorsprünge ausgeformt sind, an die der Gelenkarm (3) in den beiden extremen Schwenkstellungen anlegbar ist, wobei in der einen extremen Stellung der Gelenkarm (3) mindestens etwa koaxial zur Säule (2) und in der anderen mindestens etwa rechtwinklig zur Säule (2) gerichtet ist.

## Claims

1. A holding means for a telephone, a writing support, a key-operated office machine or the like, comprising a column (2) attachable to a table top (1) or similar support and having a self-retaining hinged arm (3), the hinged arm (3) being articulated via one end portion to the column (2) and via the other end portion to one end of a further supporting arm (4) on whose free end a supporting plate (5) or the like is disposed, the hinged arm (3) comprising two casing half-shells divided in their longitudinal extension or a rail, which are or is mounted to rotate around pivots retained on the column (2) and the supporting arm (5), at least one rail (6) or a pair of rails being additionally provided whose ends are articulated eccentrically to hinge discs (7, 8) disposed on the pivots, said hinge discs (7, 8) forming non-rotatable components of the column (2) and the arm (4), **characterized in that** the radial distance of the places of articulation (9, 10) of the rail (6) from the pivots (11, 12) differs, the distance (a) of the place of articulation (9) at the column side hinge disc (7) being larger than the distance (b) of the place of articulation (10) at the supporting arm side hinge disc (8).

2. A holding means according to claim 1, **characterized in that** articulated to the hinge discs (7, 8) are two rails (6) or pairs of rails which have the same operative length, the distance from one another of the places of articulation of the bars or pairs of bars being larger at the column side hinge disc (7) than the distance of the places of articulation at the supporting arm side hinge disc (8).

3. A holding means according to claims 1 or 2, **characterized in that** when the link situated between the supporting arm (4) and the pivoting arm (3) is extended, the supporting plate (5) disposed at the end of the supporting arm (4) extends directed substantially parallel with the plane spanned by the base part of the column (2).

4. A holding means according to one of claims 1 to 3, **characterized in that** the column (2) and the supporting arm (4) are formed with projections to which the pivoting arm (3) can be applied in the two pivoted end positions, the pivoting arm (3) being directed at least substantially coaxially with the column (2) in one end position and being directed at least substantially at right angles to the column (2) in the other end position.

## Revendications

1. Support pour un appareil téléphonique, un bloc-notes, un appareil de bureau actionné par touches ou analogues, constitué d'une colonne (2) pouvant être fixée à un plateau de table (1) ou un support similaire, avec bras articulé (3) autoportant, le bras articulé (3) étant articulé par une pièce d'extrémité à la colonne (2) et par l'autre pièce d'extrémité à l'extrémité d'un autre bras porteur (4) à l'extrémité libre duquel est disposé un plateau porteur (5) ou analogue, le bras articulé (3) comprenant deux demi-coquilles de boîtier divisées dans sa longueur ou un rail, qui sont maintenues ou qui est maintenu à rotation autour d'axes portés par la colonne (2) et par le bras porteur (4), au moins un rail (6) ou une paire de rails étant prévus en supplément, dont les extrémités sont articulées en position excentrique sur des disques d'articulation (7, 8) situés sur les axes d'articulation, ces disques d'articulation (7, 8) constituant des composants ne pouvant tourner de la colonne (2) et du bras porteur (4), caractérisé en ce que l'écartement radial des points d'articulation (9, 10) du rail (6) par rapport aux axes d'articulation (11, 12) est différent, l'écartement (a) du point d'articulation (9) situé sur le disque d'articulation (7) côté colonne étant plus grand que l'écartement (b) du point d'articulation (10) situé sur le disque d'articulation (8) côté bras porteur.

2. Support selon la revendication 1, caractérisé en ce que sur les disques d'articulation (7, 8) deux rails (6) ou paires de rails sont articulés, qui présentent la même longueur de travail, l'écartement mutuel des points d'articulation des rails ou des paires de rails sur le disque d'articulation (7) situé côté colonne étant plus grand que l'écartement des points d'articulation situés sur le disque d'articulation (8) côté bras porteur.

3. Support selon la revendication 1 ou 2, caractérisé en ce que le plateau porteur (5) disposé à l'extrémité du bras porteur (4) est, lorsque l'articulation située entre le bras porteur (4) et le bras articulé (3) est étendue, orienté au moins sensiblement parallèlement au plan sur lequel est serrée la pièce de pied de la colonne (2).

4. Support selon l'une des revendications 1 à 3, caractérisé en ce que des saillies sont formées sur la colonne (2) et sur le bras porteur (4), sur lesquelles le bras articulé (3) peut s'appuyer dans les deux positions extrêmes d'inclinaison, le bras articulé (3) étant dans une position extrême au moins sensiblement coaxial à la colonne (2) et dans l'autre position extrême orienté au moins sensiblement perpendiculairement à la colonne (2).
